# EUROPÄISCHE PATENTSCHRIFT

(11) **EP 2 338 062 B1**
(45) Veröffentlichungstag und Bekanntmachung des Hinweises auf die Patenterteilung: **29.11.2017**
(21) Anmeldenummer: 08875179.7
(22) Anmeldetag: 15.10.2008
(51) Int. Cl.: G01P 3/38, G01S 11/12, G08G 1/052, G08G 1/054, G06T 3/40, G01S 7/40, G01S 13/58

(54) **VERFAHREN UND SYSTEM ZUR ERMITTLUNG EINER FAHRZEUGGESCHWINDIGKEIT**
METHOD AND SYSTEM FOR DETERMINING A VEHICLE SPEED
PROCÉDÉ ET SYSTÈME DE DÉTERMINATION D'UNE VITESSE D'UN VÉHICULE

(43) Veröffentlichungstag der Anmeldung: 29.06.2011
(73) Patentinhaber: Siemens AG Österreich, 1210 Wien (AT)
(72) Erfinder: RIEGER, Nikolai, 3564 Plank/Kamp (AT); ASPERGER, Karl, A-1050 Wien (AT)
(74) Vertreter: Maier, Daniel Oliver
(86) Internationale Anmeldenummer: PCT/EP2008/063811
(87) Internationale Veröffentlichungsnummer: WO 2010/043252

(56) Entgegenhaltungen:
- EP-A- 0 541 978
- EP-A- 1 515 152
- EP-A- 1 713 267
- WO-A-2006/094318
- DE-A1- 2 211 462
- GB-A- 2 342 800

## Beschreibung

### Technisches Gebiet

Die Erfindung betrifft ein Verfahren und ein System zum Ermitteln der Geschwindigkeit von Fahrzeugen, die eine Erfassungseinheit passieren, wobei mittels einer Messeinrichtung die Geschwindigkeit passierender Fahrzeuge gemessen wird und für den Fall, dass für ein Fahrzeug der Messwert der Geschwindigkeit eine vorgegebene Höchstgeschwindigkeit überschreitet eine Bildaufnahme- und Verarbeitungseinrichtung dazu veranlasst wird, ein erstes und in einem zeitlichen Abstand folgend ein zweites Bild dieses Fahrzeugs aufzunehmen, um aus der in diesen beiden Bildern enthaltenen Bildinformation einen Rechenwert der Geschwindigkeit zu berechnen, so dass der Messwert mit dem Rechenwert verglichen und auf Plausibilität überprüft werden kann.

### Stand der Technik

Zur Überwachung der Höchstgeschwindigkeit von Kraftfahrzeugen werden heutzutage rechnergestützte Erfassungseinheiten eingesetzt, welche beispielsweise mittels einer Radarmesseinrichtung die Geschwindigkeit von passierenden Fahrzeugen messen. Wenn ein Geschwindigkeitsverstoß erkannt wird, nimmt eine Digitalkamera, gegebenenfalls unter Ausleuchtung eines Blitzes, ein Bild von diesem Fahrzeug auf. In dieses Digitalbild werden weitere Informationen, wie gemessene Fahrzeuggeschwindigkeit, Zeit und Ort eingeblendet. Diese digitalen Daten werden dann über verschiedene Kommunikationssysteme einer Zentrale zur Weiterverarbeitung zugeleitet, wo mittels bekannter Bildanalyseverfahren, wie beispielsweise der automatischen Nummernschilderkennung, der Halter des Fahrzeugs ermittelt und gegebenenfalls eine Strafverfolgung eingeleitet wird.

Ein solches elektronisches Erfassungs-, Übertragungs- und Verarbeitungssystem ist beispielsweise unter der Marke "SITRAFFIC LYNX" der Firma Siemens bekannt. Dieses System, das sowohl in einer stationären Ausführung (ERS 400) als auch in einer mobilen Ausführung (ERM 501) verfügbar ist, beinhaltet eine FM-CW-Radarmesseinrichtung zur Messung der Fahrzeuggeschwindigkeit, eine digitale Aufnahmeeinheit mit einem CCD-Bildsensor (Charge Coupled Device) zur Aufnahme des Digitalbildes, sowie über ein Rechnersystem mit einer Übertragungseinrichtung für LAN/WLAN/EDGE/UMTS/HSDPA/HSUPA-Modem.

Im Falle einer Strafverfolgung gilt der Grundsatz, dass ein Gericht von der durch den Betroffenen tatsächlich gefahrenen Geschwindigkeit überzeugt sein muss. Oftmals wird aber die Richtigkeit des Messwertes der Fahrzeuggeschwindigkeit infrage gestellt.

Um einen solchen Einwand zu begegnen, wird die Genauigkeit des Geschwindigkeitsmesswertes innerhalb einer behördlich vorgegebenen oberen und unteren Messgrenze durch Eichung der Messeinrichtung überwacht.

Zur Überprüfung der Plausibilität einer gemessenen Fahrzeuggeschwindigkeit ist bekannt, entweder frontseitig oder heckseitig zwei Fotos vom Fahrzeug aufzunehmen. In Kenntnis des jeweiligen Aufnahmezeitpunkts und der durchfahrenen Strecke, wie beispielsweise durch Sensoren erfasst wird, kann die Geschwindigkeit des Fahrzeugs aus diesem Bildpaar errechnet werden. Ein solcher Nachweis, auch als sekundäre Evidenz ("Secondary Evidence") bezeichnet, ist in vielen Ländern bereits gesetzlich vorgeschrieben. Als Sensoren werden häufig sogenannte Induktions- oder Piezo-Schleifen eingesetzt, die in den Straßenbelag eingebettet sind. Diese Sensoren haben aber eine begrenzte Lebensdauer und sind störanfällig. Ein Austausch oder eine Reparatur ist wegen der Einbettung im Straßenbelag sehr aufwändig.

Es ist auch bekannt, den Aufnahmezeitpunkt eines Einzelfotos jeweils am Anfang und am Ende eines fest vorgegebenen Zeitintervalls vorzugeben. Dabei tritt aber das Problem auf, dass bei dieser Vorgabe gegensätzliche Anforderungen erfüllt werden müssen: Für Fahrzeuge, die sich mit hoher Geschwindigkeit auf die Erfassungseinheit zu bewegen, muss das Zeitintervall möglichst kurz sein, denn sonst kann es sein, dass das Fahrzeug das Gesichtsfeld der Kamera bereits verlassen hat, wenn das zweite Foto (Beweisfoto) ausgelöst wird. Ein kurzes Zeitintervall ist aber ungünstig für langsam fahrende Fahrzeuge, da aufgrund der geringen Geschwindigkeit die beiden Einzelbilder der Kamera nahezu deckungsgleich übereinander liegen. Man stößt hier bei der Auswertung des Bildpaares an die Grenzen der Auflösung der Kamera. Die aus der Bildinformation berechnete Fahrzeuggeschwindigkeit ist mit einem großen Fehler behaftet oder überhaupt nicht möglich. Die gewünschte sekundäre Evidenz kann also an den grenznahen Bereichen des Geschwindigkeitsmessbereiches nicht erbracht werden.

Die DE 22 11 462 beschreibt ein Verfahren zur Feststellung der Geschwindigkeit von Fahrzeugen mit zeitlich aufeinanderfolgenden fotografischen Aufnahmen, wobei der zwischen den Aufnahmen zurückgelegte Weg des Fahrzeuges zur Bestimmung der Geschwindigkeit herangezogen wird.

Aus der GB 2 342 800 ist ein Verfahren zur Ermittlung einer Fahrzeuggeschwindigkeit bekannt, bei dem die Fahrzeuggeschwindigkeit aus der Bildinformation zweier elektronisch aufgenommener Bilder ermittelt wird. Dabei wird das Intervall der Aufnahmezeitpunkte der beiden Bilder in Abhängigkeit eines Geschwindigkeits-Messwertes vorgegeben, der mittels Messeinrichtung zuvor bestimmt wurde.

Aus der EP 1 515 152 ist es weiterhin bekannt, die Richtungsbestimmung zu einem Objekt mittels Bildaufnahmen durchzuführen. Methoden der digitalen Bildverarbeitung sind der EP 1 713 267 zu entnehmen.

### Darstellungen der Erfindung

Der vorliegenden Erfindung liegt die Aufgabe zu Grunde, ein Verfahren und ein System zur Ermittlung einer Fahrzeuggeschwindigkeit so anzugeben, dass eine von der Geschwindigkeit eines Fahrzeugs unabhängige Überprüfung der Plausibilität eines Geschwindigkeitsmesswertes durch rechentechnische Auswertung einer Folge von digitalen Einzelbildern auf möglichst einfache Weise möglich ist. Diese Aufgabe wird für ein Verfahren mit den Merkmalen des Patentanspruchs 1 und für ein System mit den Merkmalen des Patentanspruchs 10 gelöst.

Das erfindungsgemäße Verfahren ist sowohl für Fahrzeuge anwendbar, die sich auf die Erfassungseinheit zu bewegen (Frontfoto) als auch für Fahrzeuge, die sich von dieser entfernen (Heckfoto). Damit kann die sekundäre Evidenz für einen Verkehrsstrom der in beide Fahrtrichtungen einer Straße fließt erbracht werden. Die Realisierung der Erfindung ist einfach, da sie im Wesentlichen durch Software erfolgt. Die Hardware bestehender Erfassungseinheiten kann nahezu unverändert beibehalten werden. Die Erfindung amortisiert sich rasch, da im Falle einer Strafverfolgung weniger Rechtsprobleme auftreten.

Erfindungsgemäß wird bei der Berechnung der Geschwindigkeit von der im ersten Bild enthaltenen Bildinformation nur ein Teil für die Berechnung des Rechenwertes der Geschwindigkeit verwendet. Indem nicht die gesamte Informationsmenge, sondern nur ein Teil davon aus dem digitalen Bildsensor ausgelesen wird, steht dieser Bildsensor rasch wieder für die Aufnahme eines zweiten Fotos zur Verfügung. Durch die verkürzte Auslesezeit ist die Reaktionszeit Kamera schneller, so dass von einem sich schnell nähernden Fahrzeug rasch ein zweites Foto (Beweisfoto) aufgenommen werden kann, bevor diese aus dem Sichtbereich der Kamera entschwindet. Bislang waren hierfür separate Sensoren, wie beispielsweise Lichtschranken, Piezosensoren, Messschleifen im Straßenbelag oder dgl. erforderlich. Diese Sensoren entfallen nun.

Ein besonderer Vorteil kann sich dadurch ergeben, wenn der für die Geschwindigkeitsberechnung verwendete Anteil der Bildinformation des ersten Bildes von der gemessenen Fahrzeuggeschwindigkeit abhängig gemacht wird. Dadurch wird 20 erreicht, dass die zur Berechnung der Geschwindigkeit verwendete Informationsmenge der gemessenen Geschwindigkeit entspricht.

Es kann zweckmäßig sein, wenn für das Auslesen einer Teilinformation aus einem Bildsensor bereits bekannte Auslese-Methoden, wie beispielsweise das Auslesen im Binning-Mode herangezogen werden.

Eine besonders einfache Ausführung des erfindungsgemäßen Verfahrens kann dadurch gekennzeichnet sein, dass beim auslesen eines an sich bekannten zeilenweise und spaltenweise organisierten Bildsensor nicht jede Zeile ausgelesen wird, sondern beispielsweise nur jede zweite vertikale Zeile, dass heißt die Bildinformation als Halbbild, entnommen wird. Dadurch verschlechtert sich zwar der vertikale Informationsgehalt, für die Berechnung der Geschwindigkeit ist aber der horizontale Informationsgehalt ausschlaggebend.

Um die Auslesezeit weiter zu verkürzen kann es günstig sein, wenn nur jede dritte oder n-te Zeile aus dem digitalen Bildsensor ausgelesen wird. Dadurch verringert sich die Auslesezeit entsprechend der gewählten Zahl n. Dies ermöglicht eine besonders einfache Adaption an die Fahrzeuggeschwindigkeit.

Besonders günstig kann es sein, wenn das Maß beziehungsweise der Anteil der zeilenweise ausgelesenen Bildinformation, das heißt die Zahl n, an den Messwert der Geschwindigkeit adaptiert wird. Die ausgelesene vertikale Informationsmenge verringert sich je nach Ausmaß der Geschwindigkeitsübertretung. Dadurch kann die Reaktionsgeschwindigkeit des Erfassungssystems nahezu stufenlos an die tatsächliche Fahrzeuggeschwindigkeit angepasst werden.

Eine besondere Ausführungsform des erfindungsgemäßen Verfahrens kann dadurch gekennzeichnet sein, dass der zeitliche Abstand zwischen den beiden Einzelfotos so gewählt wird, dass in einer Betrachtung, in welcher die beiden Bilder übereinander gelegt werden, korrespondierende Bildbereiche des Fahrzeugs durch einen maximalen Bildabstand beanstandet sind. Dadurch kann erreicht werden, dass unabhängig von der Fahrzeuggeschwindigkeit das Fahrzeug in einem Überlagerungsbild in einem vorgegebenen Bildbereich abgebildet werden kann. Für die numerische Auswertung kann dies günstig sein. Da die Aufnahme des zweiten Bildes, das so genannte Beweisfoto darstellt, kann es günstig sein, wenn das zweite Digitalbild in voller Auflösung aufgenommen und vollständig ausgelesen wird. Für das Auslesen des zweiten Bildes steht in der Regel genügend Zeit zur Verfügung. Das Beweisfoto sollte möglichst viele Details enthalten, so dass gegebenenfalls die Identität des Lenkers des Fahrzeugs zweifelsfrei festgestellt werden kann. In Deutschland ist ein Front-Beweisfoto gesetzlich vorgeschrieben.

Es kann sehr vorteilhaft sein, wenn für die Berechnung der Geschwindigkeit ein signifikanter Bildbereich, wie beispielsweise das Kfz-Kennzeichenschild, verwendet wird. Dadurch kann aus zwei Distanzmessungen zum Mittelpunkt des Kfz-Kennzeichenschildes und aus dem Öffnungswinkel der Kameraeinrichtung die Geschwindigkeit eines Fahrzeugs berechnet werden. Die Breite eines Kennzeichenschildes ist je nach Herkunftsland genormt. Durch Auswerten vertikaler Konturen des Kennzeichenschildes kann aus dem Doppelbild die Geschwindigkeit berechnet werden. Die Identität des Fahrzeuglenkers ergibt sich aus der Zuordnung zum Kennzeichen. Zur automatischen Auswertung von Kfz-Kennzeichenschildern gibt es bereits eine Reihe von Algorithmen. Die Anpassung dieser Software an die erfindungsgemäße Berechnung der Geschwindigkeit erfordert keinen großen Aufwand.

Hierbei sei angemerkt, dass die Identität des Fahrzeuglenkers auch durch Gesichtserkennung erfolgen kann, indem ein Front-Beweisfoto rechentechnisch ausgewertet wird.

### Kurzbeschreibung der Zeichnungen

Zur weiteren Erläuterung der Erfindung wird im nachfolgenden Teil der Beschreibung auf die Zeichnungen Bezug genommen in denen weitere vorteilhafte Ausgestaltungen, Einzelheiten und Weiterbildungen der Erfindung zu entnehmen sind.

Es zeigt:
- Figur 1: eine am Straßenrand installierte Erfassungseinheit zur Überwachung der Höchstgeschwindigkeit vorbeifahrender Fahrzeuge gemäß der Erfindung;
- Figur 2: zwei von der Erfassungseinheit aufgenommene Einzelbilder eines passierenden Fahrzeugs, wobei gemäß der Erfindung der Aufnahmezeitpunkt des zweiten Einzelbildes erfindungsgemäß von der gemessenen Geschwindigkeit abhängig ist;
- Figur 3: eine Draufsicht auf eine Erfassungseinheit gemäß der Erfindung, wobei sich die Fahrzeuge auf einer dreispurigen Fahrbahn, wobei sich ein Fahrzeug auf die Erfassungseinheit zu ein anderes Fahrzeug von der Erfassungseinheit wegbewegt.

### Ausführung der Erfindung

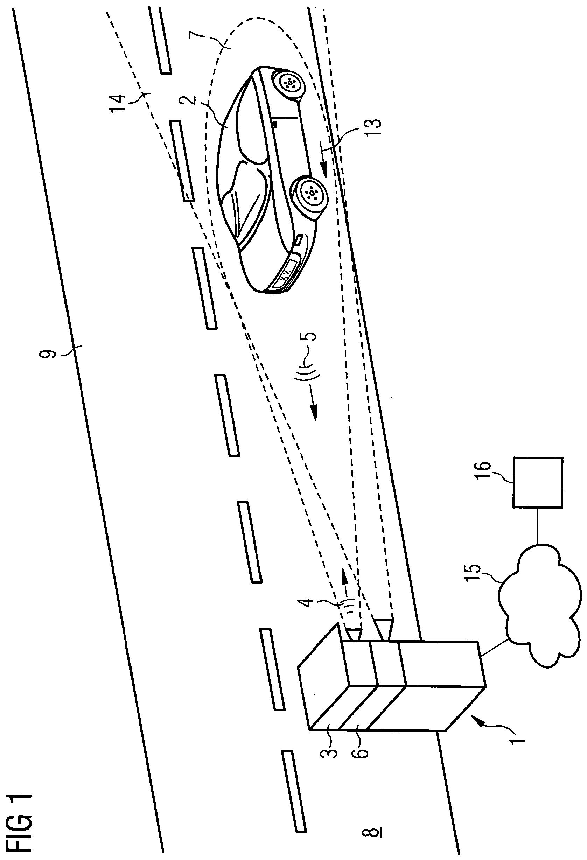

Zum besseren Verständnis der Erfindung wird einleitend anhand der Figur 1 zunächst das derzeit praktizierte Verfahren zur Überwachung der Höchstgeschwindigkeit von Fahrzeugen erläutert. Die Figur 1 zeigt in einer räumlichen Skizze eine Erfassungseinheit 1. Die Erfassungseinheit 1 ist am Rand einer Straße 9 ortsfest installiert. Auf einer Fahrbahn 8 der Straße 9 befinden sich passierenden Fahrzeuge, von denen in Figur 1 ein Fahrzeug 2 gezeichnet ist. Dieses Fahrzeug 2 fährt in Richtung des Pfeils 13 auf die Erfassungseinheit 1 zu. Die Erfassungseinheit 1 besteht aus einer Radar-Geschwindigkeits-Messeinrichtung 3, im vorliegenden Beispiel ist dies ein FM-CW-Radargerät. Die Messeinrichtung für die Geschwindigkeit kann aber auch ein optisches Gerät sein, wie beispielsweise ein Lasergeschwindigkeitsmessgerät.

Die Radar-Messeinrichtung 3 visiert das Fahrzeug 2 an und sendet einen Radarstrahl 4 in Richtung des Fahrzeugs 2. Die nutzbare Reichweite des Radarstrahls 4 ist in Figur 1 durch die Radarkeule 7 angedeutet. Der vom Fahrzeug 2 reflektierte Radarstrahl 5 wird in der Messeinrichtung 3 empfangen. In an sich bekannter Weise wird aus der Phasenverschiebung beziehungsweise aus der Frequenzverschiebung der gesendeten und empfangenen Radarstrahlen 4, 5 die Geschwindigkeit des Fahrzeugs 2 ermittelt.

Liegt die mit dem Radarmessgerät 3 gemessene Geschwindigkeit über einer vorgegebenen Höchstgeschwindigkeit, so wird vom Radarmessgerät 3 eine in der Erfassungseinheit 1 vorgesehene digitale Bildaufnahme- und Verarbeitungseinheit 6 aktiviert, um ein Beweisfoto von diesem Fahrzeug aufzunehmen.

Die Aufnahme des Beweisfotos erfolgt mittels einer Kameraeinrichtung, die Teil dieser Bildaufnahme- und Verarbeitungseinrichtung 6 ist. Sie besteht aus einer hochauflösenden (16 Bit) Digitalkamera mit einem einzigen CCD-Bildsensor. Der Fokus sowie die Blende der Digitalkamera sind fest vorgegeben. Bei der Aufnahme wird die Belichtungszeit von einer nicht näher dargestellten Steuereinrichtung vorgegeben. In der Erfassungseinheit 1 ist ein Blitz vorgesehen, der je nach Ausführung und Betriebsbedingungen zum Einsatz kommen kann, entweder als weißes Licht oder als Infrarotlicht. Je nach Empfindlichkeitsspektrum der Kamera kann auch mit anderen Farben, wie z.B. mit der Farbe Rot oder Grün (derzeit höchste Empfindlichkeit bei vielen CCD-Kameras) geblitzt werden. Der Erfassungsbereich der Digitalkamera ist in Figur 1 als Sichtkegel 14 angedeutet. Der Sichtkegel 14 reicht weiter als die Radarkeule 7. Dadurch sind Fahrzeuge, die von der Kamera wegfahren (Heckfotos) leichter zu überwachen, sie bleiben auch nach einem erkannten Geschwindigkeitsvergehen länger im Sichtbereich der Kamera. Demgegenüber geraten Fahrzeuge 2, die sich auf die Erfassungseinheit 1 zu bewegen, schnell aus dem Sichtkegel 14 heraus.

Günstig für die Erfassung eines Geschwindigkeitsvergehens ist es, wenn sich das Fahrzeug 2 auf der Mittellinie der Radarkeule 7 (sie stimmt mit der optischen Achse des Sichtkegels 14 der Digitalkamera überein) im Bereich des Fokus (Tiefenschärfebereich) der Digitalkamera befindet.

Wenn ein Geschwindigkeitsverstoß erkannt wird, wird das aufgenommene Beweisfoto zusammen mit anderen relevanten Daten als digitales Datenpaket über das Kommunikationsnetz 15 an die Zentrale 16 geleitet, wo die elektronische Auswertung und Archivierung erfolgt. Methoden zur Auswertung und Analyse wie beispielsweise Buchstaben-Erkennungsprogramme (Optical Caracter Recognition Software) sind hierfür bekannt.

Wie bereits eingangs erwähnt, hat die GeschwindigkeitsMesseinrichtung einer solchen Erfassungseinheit eine von Seiten der Behörde zugewiesene obere beziehungsweise untere Messgrenze. Eine solche von behördlicher Seite vorgegebene Messgrenze kann beispielsweise für die untere Messgrenze 10 km/h, für die obere Messgrenze 300 km/h sein. Wenn die tatsächliche Geschwindigkeit eines Fahrzeugs in die Nähe dieser Messgrenze kommt, stößt die Ermittlung der sekundären Evidenz auf das eingangs dargestellte Problem.

Der erfindungsgemäße Ansatz zur Lösung dieses Problems ist darin zu sehen, dass der zeitliche Abstand zwischen den beiden Einzelfotos in Abhängigkeit des Messwertes der Kfz-Geschwindigkeit vorgegeben wird. Genauer gesagt, nach dem das erste Foto von der Geschwindigkeitsmesseinrichtung ausgelöst wurde, wird der Aufnahmezeitpunkt für das zweite Foto an die gemessene Geschwindigkeit adaptiert.

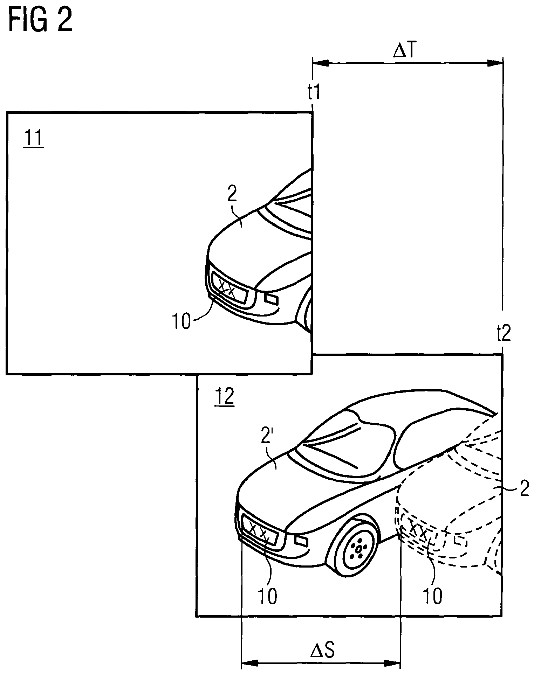

Das erfindungsgemäße Verfahren wird im Folgenden anhand der Figur 2 näher erläutert:
In der Figur 2 ist eine Bildfolge diskreter Einzelbilder 11, 12 skizziert, wobei in jedem Bild 11, 12 jeweils eine Momentaufnahme des Fahrzeugs 2 skizziert ist. Auslöser für die Aufnahme des ersten Bildes 11 ist das Ereignis eines gemessenen Geschwindigkeitsvergehens. Im Folgenden wird davon ausgegangen, dass das Einzelbild 11 im Zeitpunkt t1 aufgenommen wird, das Einzelbild 12 zu einem späteren Zeitpunkt t2. Das Zeitintervall ΔT=t2-t1 entspricht einer Verzögerungszeit für das Auslösen des zweiten Bildes 12 und wird im Folgenden auch als Zweitbild-Verzögerungszeit bezeichnet. Gemäß der Erfindung ist die Zweitbild-Verzögerungszeit (t2 minus t1) von der durch das Radargerät gemessenen Fahrzeuggeschwindigkeit abhängig. Auf diese Weise kann durch Überlagerung der beiden zeitlich nacheinander aufgenommenen Fahrzeugbilder (siehe Fahrzeug 2 und Fahrzeug 2' in Bild 12 der Figur 2) aus korrespondierenden objekttypischen Bildbereichen eine Bilddistanz Δs (die eine Wegstrecke auf der Fahrbahn abbildet) abgelesen und rechentechnisch ausgewertet werden. Ein solcher objekttypischer Bildbereich kann beispielsweise eine Kontur in der Silhouette der Fahrzeugkarosserie oder eine vertikale Kante des Nummernschilds 10 sein (Figur 2). Da die Zweitbild-Verzögerungszeit dem System bekannt ist (das Zeitintervall t2-t1 wird vom System vorgegeben), kann die Geschwindigkeit des Fahrzeugs 2 berechnet werden. Stimmt diese, aus der Bildinformation berechnete Fahrzeuggeschwindigkeit, mit der gemessenen Fahrzeuggeschwindigkeit (Radar-Messsignal) übereinen, so liegt ein übereinstimmendes Ergebnis zweier unterschiedlicher Ermittlungsmethoden vor. Wenn die Messung mit der Rechnung übereinstimmt, kann mit guter Gewissheit davon ausgegangen werden, dass der FM-CW-Radar-Messwert plausibel ist. Damit ist der Nachweis der eingangs geforderten zweiten Evidenz erbracht. Die Anfechtung einer Geschwindigkeitsübertretung ist damit nicht mehr so leicht möglich.

Die Zweitbild-Verzögerungszeit t2-t1, das heißt das Zeitintervall ΔT wird im vorliegenden Ausführungsbeispiel durch einen Digitalrechner (Mikrocomputer oder Mikrokontroller) in der Erfassungseinheit 1 berechnet und der Digitalkamera vorgegeben. Der Digitalrechner erhält ein der gemessenen Kfz-Geschwindigkeit proportionales Eingangssignal, das das FM-CW-Radar bereitstellt. Die Vorgabe der Zweitbild-Verzögerungszeit erfolgt so, dass sich das Fahrzeug im Aufnahmezeitpunkt t2 möglichst im Bereich des Fokus der Digitalkamera befindet und im zweiten Einzelbild 12 auch bei hoher Fahrgeschwindigkeit im Bildbereich der Kamera, möglichst in der Bildmitte zu liegen kommt (siehe Fahrzeug 2' in Figur 2). Das zweite Digitalbild 12 dient als Beweisfoto (auch als Messfoto bezeichnet) und wird in voller Auflösung aufgenommen.

Je nach Fahrzeuggeschwindigkeit sind zwei Fälle zu unterscheiden:
a) Die Geschwindigkeit des Fahrzeugs ist nahe der oberen Messgrenze:
   In diesem Fall geht es darum, zwei diskrete Einzelbilder des Fahrzeugs möglichst rasch hintereinander aufnehmen zu können.

   Für eine möglichst rasche Bildfolge wird gemäß einer besonderen Ausgestaltung der Erfindung von der im CCD-Bildsensor aufgenommenen Bildinformation des ersten Einzelbildes 11 nur ein Teil ausgelesen. Indem von der ersten Digitalaufnahme zum Beispiel nur jede 2. oder 3. Zeile im Binning-Mode ausgelesen wird, verkürzt sich entsprechend die Auslesezeit. Der im vorliegenden Ausführungsbeispiel verwendete CCD-Bildsensor kann nur vergleichsweise langsam ausgelesen werden; erst durch den Binning-Mode erreicht man die gewünschte kurze Reaktionszeit, so dass der CCD-Sensor kurz nach Aufnahme und Auslesen des ersten Bildes 11 wieder aufnahmebereit für das zweite Bild 12 (Beweisfoto) ist.
   Mit anderen Worten könnte man auch sagen, dass man eine Verschlechterung der Vertikal-Bildqualität des ersten Bildes 11 bewusst in Kauf nimmt, um das zweite Bild 12 möglichst rasch nach dem ersten Bild 11 schießen zu können. Aus dem ersten Bild 11 muss lediglich eine horizontale Referenz zweifelsfrei ableitbar sein um die Fahrzeuggeschwindigkeit berechnen und die sekundäre Evidenz nachweisen zu können. Eine solche horizontale Referenz ist im vorliegenden Ausführungsbeispiel die vertikale Kontur des Kfz-Kennzeichenschildes.
   Das Auslesen der reduzierten Bildinformation wird wie gesagt im Binning-Mode an die gemessene Kfz-Geschwindigkeit angepasst, wobei nur jede zweite, dritte oder n-te Zeile von der ersten Aufnahme ausgelesen wird. Dies bedeutet, dass sich die Auslesezeit des CCD-Bildsensors um den Faktor zwei, drei, oder um den Faktor N verringert. Dadurch wird die Zeit für das Auslesen an die Fahrzeuggeschwindigkeit angepasst.
   Beim Auslesen der reduzierten Bildinformation verringert sich natürlich die Bildauflösung in vertikaler Richtung. Dies ist aber für die Berechnung der Geschwindigkeit, für die ausschließlich horizontale Bildpunkte ausschlaggebend sind, ohne Bedeutung. Entscheidend für den Rechenwert ist lediglich, dass in horizontaler Richtung trotz Binning-Mode die volle Auflösung vorliegt.
   Das zweite Digitalfoto 12 (Beweisfoto) wird mit maximaler Auflösung aufgenommen und vollständig ausgelesen, da hier für das Auslesen genügend Zeit zur Verfügung steht.
   Für die Berechnung der Geschwindigkeit aus Einzelbildern 11, 12 kommen grundsätzlich an sich bekannte Bildanalyseverfahren infrage, die hier nicht weiter erläutert zu werden brauchen.
b) Die Geschwindigkeit des Fahrzeugs liegt nahe der unteren Messgrenze:
   In diesem Fall geht es darum, die beiden diskreten Einzelbilder 11, 12 des Fahrzeugs 2 zeitlich verzögert so aufzunehmen, dass diese Bilder 11, 12 bei einer Bild-Überlagerung genügend weit auseinander liegen. Dies wird dadurch ereicht, indem die zeitliche Verzögerung an die gemessene (langsame) Geschwindigkeit adaptiert wird. Der Abstand zwischen den beiden diskreten Einzelfotos ist dann so groß, dass man bei der Auswertung der im Bildpaar enthaltenen Bildinformation nicht an die Grenzen der Auflösung der Kameraeinrichtung stößt. Dadurch kann der Fehler bei der Berechnung der Geschwindigkeit sehr gering gehalten werden.

Bei der Anpassung des Auslösezeitpunkts an die gemessene Fahrzeuggeschwindigkeit geht man günstiger Weise so vor, dass das Fahrzeug in Überlagerungsbild etwa in gleichem Bildbereich zu liegen kommt, das heißt gleich beabstandet ist.

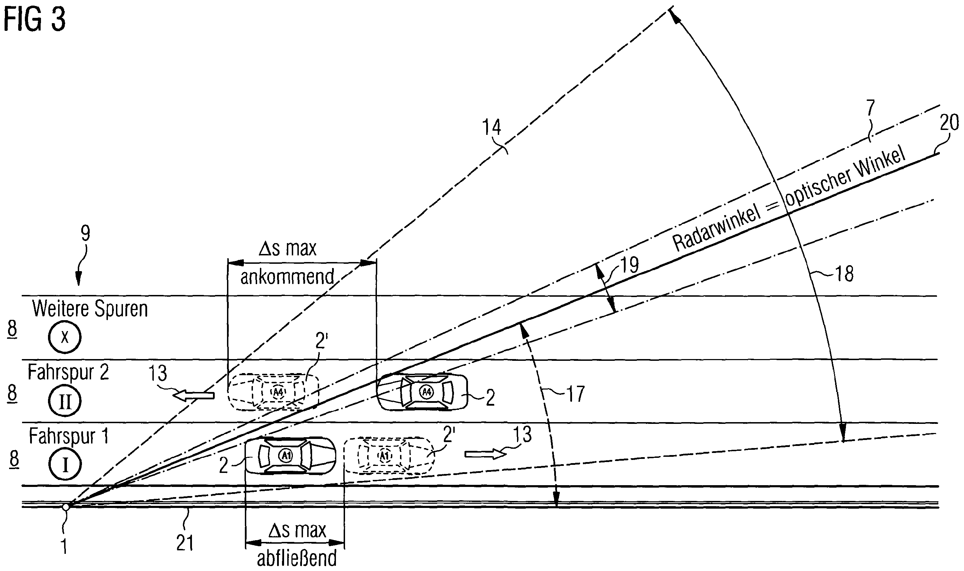

In der Figur 3 ist eine Draufsicht auf eine erfindungsgemäße Erfassungseinheit 1 zu sehen. Die Erfassungseinheit 1 überwacht die Geschwindigkeit von Fahrzeugen 2, die sich in unterschiedlicher Fahrtrichtung 13 auf Fahrspuren 8 einer Straße 9 belegen. Die Radarmesseinrichtung 3 und die Kameraeinrichtung 6 der Erfassungseinheit 1 sind auf eine gemeinsame Achse 20 ausgerichtet. Die Achse 20 schließt mit der Visierlinie 21 den so genannten Radar-Aufstellungswinkel 17 ein. Wie aus Figur 3 leicht zu entnehmen ist, ist der Öffnungswinkel 19 der Radarkeule 7 kleiner als der Öffnungswinkel 18 des Objektivs der Kamera 6. Aus Figur 3 ist gut zu entnehmen, dass das Fahrzeug 2, auf der zweiten Fahrspur, das sich mit großer Geschwindigkeit auf die Erfassungseinheit 1 zu bewegt, schnell aus dem Sichtkegel 14 der Bildaufnahme- und Verarbeitungseinrichtung 6 geraten kann. Demgegenüber ist das Fahrzeug auf Fahrspur 1, das sich in Figur 3 von links nach rechts bewegt, länger im Sichtbereich. Aus Figur 3 wird auch deutlich, dass ein Fahrzeug 2, das mit hoher Geschwindigkeit auf einer zur Erfassungseinheit 1 nahe liegenden Fahrspur bewegt, sehr schnell aus dem Sichtkegel 14 verschwindet.

Die Vorteile der Erfindung können wie folgt zusammengefasst werden:
Aus der vorstehenden Beschreibung des Ausführungsbeispiels geht deutlich hervor, dass ein wesentlicher Vorteil der Erfindung darin zu sehen ist, dass durch das erfindungsgemäße Verfahren auf einfache Weise auch an den Messbereichgrenzen eine sekundäre Evidenz erreicht werden kann. Von ganz besonderem Vorteil ist dies dann, wenn ein auf die Erfassungseinheit zufließender Verkehrsstrom überwacht werden soll. Dank der Erfindung kann das zweite Foto (Beweisfoto) so ausgelöst werden, dass sich das Fahrzeug im Fokus der Digitalkamera befindet und in einem günstigen Bereich des Überlagerungs-Bildes zu liegen kommt.

Dadurch ist es möglich, auch bei einer hohen Geschwindigkeit ein Doppel-Frontfoto des Fahrzeugs aufzunehmen, so dass auf dem Foto nicht nur das Fahrzeug, sondern auch die Eigenheiten der abgebildeten Person, die das Fahrzeug lenkt, erkennbar und rechentechnisch gegebenenfalls auswertbar sind. In Deutschland ist dies gesetzlich vorgeschrieben. Bislang waren hierfür Lichtschranken oder Induktionsschleifen erforderlich. Die Erfindung macht es möglich, dass die Geschwindigkeit von Fahrzeugen in beiden Fahrtrichtungen einer Straße nicht nur überwacht (zufließender und abfließender Verkehrsstrom), sondern zugleich auch beweiskräftige Fotos für eine Strafverfolgung bereitgestellt werden können. Die gewünschte sekundäre Evidenz kann für schnell fahrende und für langsam fahrende Fahrzeuge erbracht werden.

Die Erfindung ist nicht auf einen Fahrstreifen beschränkt, sondern bei geeigneter Ausgestaltung der digitalen Bildverarbeitung auch "multi-target-fähig", das heißt es können mehrere Fahrzeuge auf mehreren Fahrstreifen gleichzeitig nicht nur in einer, sondern in beiden Fahrtrichtungen überwacht werden. Hierbei muss seitens der Datenverarbeitung nur sichergestellt werden, dass die beiden Einzelbilder zweifelsfrei jeweils einem Fahrzeug zugeordnet werden können. Diese Zuordnung kann durch Auswertung des Kennzeichens in bekannter Weise erfolgen.

Für den Betreiber einer erfindungsgemäß ausgebildeten Geschwindigkeits-Überwachungseinrichtung stellt dies einen erheblichen Vorteil dar. Ein rein taktisches Verteidigungsvorbringen, der Geschwindigkeitsmesswert würde nicht stimmen, ist dank der Erfindung nicht mehr so leicht möglich. Im Falle eines Strafverfahrens können Verfahrenskosten eingespart werden. Dadurch kann für den Betreiber ein erheblicher Nutzen entstehen, so dass sich das erfindungsgemäße System bereits nach kurzer Zeit amortisiert. Im vorliegenden Ausführungsbeispiel wurde die Erfindung anhand eines Bildsensors erläutert, der als CCD-Bildsensor ausgebildet ist. Bekanntlich erfolgt das Auslesen eines CCD-Bildsensors so, dass in einem ersten Schritt die Bildinformation zeilenweise in ein paralleles Schieberegister eingelesen wird. Von dort wird jeder einzelne Bildpunkt (Pixel) einzeln ausgelesen und der Luminanzwert durch Analog-Digital-Wandlung bestimmt. Wenn von diesem CCD-Bildsensor - wie oben dargestellt - nur jede zweite, dritte oder n-te Zeile ausgelesen wird, ist der Auslesevorgang kürzer. Selbstverständlich ist diese Technik nicht auf die Technologie des CCD-Bildsensors beschränkt, sondern der Vorteil ergibt sich auch für andere Bildsensoren, beispielsweise für einen CMOS-Bildsensor, bei dem jeder Bildpunkt zwar separat ansprechbar ist, im Rahmen der vorliegenden Erfindung die horizontale Auflösung der Bildinformation entscheidend ist.

Selbstverständlich ist die vorliegende Erfindung auch nicht auf eine Methode der Geschwindigkeitsmessung, wie die oben dargestellte FM-CW-Radar Messmethode beschränkt, sondern funktioniert ebenso auch mit anderen Messmethoden, beispielsweise mit einer Lasergeschwindigkeitsmessung.

### Zusammenstellung der verwendeten Bezugszeichen

1 Erfassungseinheit
2 Fahrzeug
3 Messeinrichtung
4 ausgestrahlter Radarstrahl
5 reflektierter Radarstrahl
6 Bildaufnahme- und Verarbeitungseinrichtung
7 Radarkeule
8 Fahrbahn
9 Straße
10 Fahrzeugkennzeichen
11 erstes Einzelbild
12 zweites Einzelbild
13 Pfeil
14 Sichtkegel
15 Kommunikationsnetzwerk
16 Zentrale
17 Radar-Aufstellungswinkel
18 Öffnungswinkel des Objektivs der Bildaufnahme- und Verarbeitungseinrichtung
19 Öffnungswinkel der Radarkeule 7
20 Achse
21 Visierlinie
t1 erster Aufnahmezeitpunkt
t2 zweiter Aufnahmezeitpunkt
Δs Bilddistanz
ΔT zeitlicher Abstand zwischen der Aufnahme des ersten und zweiten Einzelbildes

## Patentansprüche

1. Verfahren zum Ermitteln der Geschwindigkeit von Fahrzeugen (2), die eine Erfassungseinheit (1) passieren, wobei mittels einer Messeinrichtung (3) die Geschwindigkeit der passierenden Fahrzeuge gemessen wird und für den Fall, dass für ein Fahrzeug (2) der Messwert der Geschwindigkeit eine vorgegebene Höchstgeschwindigkeit überschreitet eine digitale Bildaufnahme- und Verarbeitungseinrichtung (6) dazu veranlasst wird, ein erstes Bild (11) und in einem zeitlichen Abstand (ΔT) folgend ein zweites Bild (12) dieses Fahrzeugs (2) aufzunehmen, um durch Auslesen der Bildinformation dieser beiden Bilder (11, 12) einen Rechenwert der Geschwindigkeit zu berechnen, so dass der Messwert mit dem Rechenwert verglichen und auf Plausibilität überprüft werden kann, wobei der zeitliche Abstand (ΔT) in Abhängigkeit des Messwertes der Geschwindigkeit vorgegeben wird, **dadurch gekennzeichnet, dass** für die Ermittlung des Rechenwertes der Geschwindigkeit von der im ersten Bild (11) enthaltenen Bildinformation nur ein Teil und von der im zweiten Bild (12) enthaltenen Bildinformation die gesamte Bildinformation ausgelesen wird.

2. Verfahren nach Anspruch 1, **dadurch gekennzeichnet, dass** der für die Berechnung des Rechenwertes der Geschwindigkeit verwendete Teil der Bildinformation des ersten Bildes (11) vom Messwert der Geschwindigkeit abhängig gemacht wird.

3. Verfahren nach Anspruch 2, **dadurch gekennzeichnet, dass** die digitale Bildaufnahme- und Verarbeitungseinrichtung (6) einen digitalen Bildsensor enthält und bei der Berechnung des Rechenwertes der Geschwindigkeit eine Informationsmenge des ersten Bildes (11) verwendet, die durch Auslese dieses Bildsensor im Binning-Mode gewonnen wird.

4. Verfahren nach Anspruch 3, **dadurch gekennzeichnet, dass** der Bildsensor zeilenweise ausgelesen wird.

5. Verfahren nach Anspruch 4, **dadurch gekennzeichnet, dass** vom Bildsensor jede n-te Zeile ausgelesen wird, wobei der Wert n = 2,3,4,5, ...,N ist.

6. Verfahren nach Anspruch 5, **dadurch gekennzeichnet, dass** der Wert n vom Messwert der Geschwindigkeit abhängig gemacht wird.

7. Verfahren nach einem der Ansprüche 1 bis 6, **dadurch gekennzeichnet, dass** der zeitliche Abstand (ΔT) so gewählt wird, das korrespondierende Bildbereiche im ersten Bild (11) und im zweiten Bild (12) durch einen vorgebbaren Abstand Δs beabstandet sind.

8. Verfahren nach Anspruch 1, **dadurch gekennzeichnet, dass** aus den beiden Bildern (11, 12) jeweils die jeweilige horizontale Bildposition des Kennzeichens des Fahrzeugs ermittelt wird und bei der Berechnung des Rechenwertes der Geschwindigkeit herangezogen wird.

9. System zum Ermitteln der Geschwindigkeit von Fahrzeugen, die eine Erfassungseinheit (1) passieren, wobei eine Messeinrichtung (3) die Geschwindigkeit der passierenden Fahrzeuge misst und für den Fall, dass für ein Fahrzeug (2) der Messwert der Geschwindigkeit eine vorgegebene Höchstgeschwindigkeit überschreitet eine Bildaufnahme- und Verarbeitungseinrichtung (6) dazu veranlasst, mittels eines digitalen Bildsensors ein erstes Bild (11) und in einem zeitlichen Abstand (ΔT) folgend ein zweites Bild (12) dieses Fahrzeugs aufzunehmen, um durch Auslesen der Bildinformation dieser beiden Bilder einen Rechenwert der Geschwindigkeit zu berechnen, wobei bei der Ermittlung der Geschwindigkeit von der Erfassungseinheit der Messwert und der Rechenwert berücksichtigt werden, und wobei der zeitliche Abstand (ΔT) vom Messwert der Geschwindigkeit abhängig ist, **dadurch gekennzeichnet, dass** die Bildaufnahme- und Verarbeitungseinrichtung (6) so ausgebildet ist, dass für die Ermittlung des Rechenwertes der Geschwindigkeit von der im ersten Bild (11) enthaltenen Bildinformation nur ein Teil und von der im zweiten Bild (12) enthaltenen Bildinformation die gesamte Bildinformation ausgelesen wird.

10. System nach Anspruch 9, **dadurch gekennzeichnet, dass** die Bildaufnahme- und Verarbeitungseinrichtung (6) so ausgebildet ist, dass der für die Berechnung des Rechenwertes der Geschwindigkeit verwendete Anteil der Bildinformation des ersten Bildes (11) vom Messwert der Geschwindigkeit abhängig ist.

11. System nach Anspruch 9 oder 10, **dadurch gekennzeichnet, dass** die digitale Bildaufnahme- und Verarbeitungseinrichtung (6) einen digitalen Bildsensor enthält und so ausgebildet ist, dass bei der Berechnung des Rechenwertes der Geschwindigkeit eine Informationsmenge des ersten Bildes (11) verwendet wird, die durch Auslesen dieses Bildsensors im Binning-Mode gebildet ist.

12. System nach Anspruch 11, **dadurch gekennzeichnet, dass** die Bildaufnahme- und Verarbeitungseinrichtung (6) so ausgebildet ist, dass der Bildsensor zeilenweise ausgelesen wird.

13. System nach Anspruch 12, **dadurch gekennzeichnet, dass** die Bildaufnahme- und Verarbeitungseinrichtung (6) so ausgebildet ist, dass vom Bildsensor jede n-te Zeile ausgelesen wird, wobei der Wert n = 2,3,4,5 ..., N ist.

14. System nach Anspruch 13, **dadurch gekennzeichnet, dass** die Bildaufnahme- und Verarbeitungseinrichtung (6) so ausgebildet ist, dass der Wert n vom Messwert der Geschwindigkeit abhängig ist.

15. System nach Anspruch 11, **dadurch gekennzeichnet, dass** die Bildaufnahme- und Verarbeitungseinrichtung (6) so ausgebildet ist, dass das zweite Bild (12) das volle Auflösungsvermögen des Bildsensors aufweist.

16. System nach Anspruch 11, **dadurch gekennzeichnet, dass** die Bildaufnahme- und Verarbeitungseinrichtung (6) so ausgebildet ist, dass im ersten Bild (11) und im zweiten Bild (12) die horizontale Bildposition des Kennzeichens (10) des Fahrzeugs (2) ermittelt wird und bei der Berechnung der Geschwindigkeit des Fahrzeugs verwendet wird.

## Claims

1. Method for determining the speed of vehicles (2) which pass an acquisition unit (1), wherein the speed of the passing vehicles is measured by means of a measuring device (3) and in the event that, for a vehicle (2), the measured value of the speed exceeds a predefined maximum speed, a digital image recording and processing device (6) is made to record a first image (11) and, following a temporal spacing (ΔT), a second image (12) of said vehicle (2), in order to calculate a calculated value of the speed by reading out the image information of said two images (11, 12), so that the measured value can be compared with the calculated value and checked for plausibility, wherein the temporal spacing (ΔT) is predefined as a function of the measured value of the speed, **characterised in that,** for determining the calculated value of the speed, only a part of the image information contained in the first image (11) and the entirety of the image information contained in the second image (12) is read out.

2. Method according to claim 1, **characterised in that** the part of the image information of the first image (11) used for the calculation of the calculated value of the speed is made dependent upon the measured value of the speed.

3. Method according to claim 2, **characterised in that** the digital image recording and processing device (6) contains a digital image sensor and, when calculating the calculated value of the speed, uses a quantity of information of the first image (11), which is obtained by reading out said image sensor in binning mode.

4. Method according to claim 3, **characterised in that** the image sensor is read out line by line.

5. Method according to claim 4, **characterised in that** every n-th line is read out from the image sensor, wherein the value n = 2,3,4,5,...N.

6. Method according to claim 5, **characterised in that** the value n is made dependent upon the measured value of the speed.

7. Method according to one of claims 1 to 6, **characterised in that** the temporal spacing (ΔT) is selected such that the corresponding image regions in the first image (11) and in the second image (12) are spaced apart by a predefinable spacing Δs.

8. Method according to claim 1, **characterised in that** in each case the respective horizontal image position of the indicator of the vehicle is determined from the two images (11, 12) and is used when calculating the calculated value of the speed.

9. System for determining the speed of vehicles which pass an acquisition unit (1), a measuring device (3) measures the speed of the passing vehicles and in the event that, for a vehicle (2), the measured value of the speed exceeds a predefined maximum speed, an image recording and processing device (6) is made to record a first image (11) and, following a temporal spacing (ΔT), a second image (12) of said vehicle (2) by means of a digital image sensor, in order to calculate a calculated value of the speed by reading out the image information of said two images, wherein the acquisition unit takes into consideration the measured value and the calculated value when determining the speed, and wherein the temporal spacing (ΔT) is dependent upon the measured value of the speed, **characterised in that** the image recording and processing device (6) is configured such that, for determining the calculated value of the speed, only a part of the image information contained in the first image (11) and the entirety of the image information contained in the second image (12) is read out.

10. System according to claim 9, **characterised in that** the image recording and processing device (6) is configured such that the portion of the image information of the first image (11) used for calculating the calculated value of the speed is dependent upon the measured value of the speed.

11. System according to claim 9 or 10, **characterised in that** the digital image recording and processing device (6) contains a digital image sensor and is configured such that, when calculating the calculated value of the speed, a quantity of information of the first image (11) is used, which is formed by reading out said image sensor in binning mode.

12. System according to claim 11, **characterised in that** the image recording and processing device (6) is configured such that the image sensor is read out line by line.

13. System according to claim 12, **characterised in that** the image recording and processing device (6) is configured such that every n-th line is read out from the image sensor, wherein the value n = 2,3,4,5,...N.

14. System according to claim 13, **characterised in that** the image recording and processing device (6) is configured such that the value n is dependent upon the measured value of the speed.

15. System according to claim 11, **characterised in that** the image recording and processing device (6) is configured such that the second image (12) has the full resolution capability of the image sensor.

16. System according to claim 11, **characterised in that** the image recording and processing device (6) is configured such that in the first image (11) and in the second image (12) the horizontal image position of the indicator (10) of the vehicle (2) is determined and is used when calculating the speed of the vehicle.

## Revendications

1. Procédé de détermination de la vitesse de véhicules (2) qui passent devant une unité de détection (1), la vitesse des véhicules passant étant mesurée au moyen d'un dispositif de mesure (3), et, au cas où, pour un véhicule (2), la valeur de mesure de la vitesse dépasse une valeur maximale prédéfinie, un dispositif numérique de prise d'image et de traitement d'image (6) est incité à prendre une première image (11) et, avec un écart temporel (ΔT) suivant, une deuxième image (12) de ce véhicule (2) afin de calculer une valeur de calcul de la vitesse par lecture de l'information d'image de ces deux images (11, 12) de sorte que la valeur de mesure puisse être comparée à la valeur de calcul et vérifiée quant à la plausibilité, l'écart temporel (ΔT) étant prédéfini en fonction de la valeur de mesure de la vitesse, **caractérisé en ce que** pour la détermination de la valeur de calcul de la vitesse, seulement une partie de l'information d'image contenue dans la première image (11) est lue et **en ce que** la totalité de l'information d'image contenue dans la deuxième image (12) est lue.

2. Procédé selon la revendication 1, **caractérisé en ce que** la partie de l'information d'image de la première image (11), utilisée pour le calcul de la valeur de calcul de la vitesse, est liée à la valeur de mesure de la vitesse.

3. Procédé selon la revendication 2, **caractérisé en ce que** le dispositif numérique de prise d'image et de traitement d'image (6) comprend un capteur d'image numérique et utilise une quantité d'information de la première image (11) lors du calcul de la valeur de calcul de la vitesse, laquelle quantité d'information est acquise par lecture de ce capteur d'image en mode binning.

4. Procédé selon la revendication 3, **caractérisé en ce que** le capteur d'image est lu ligne par ligne.

5. Procédé selon la revendication 4, **caractérisé en ce que** chaque nième ligne est lue par le capteur d'image, la valeur n étant = 2, 3, 4, 5, ... N.

6. Procédé selon la revendication 5, **caractérisé en ce que** la valeur n est liée à la valeur de mesure de la vitesse.

7. Procédé selon l'une quelconque des revendications 1 à 6, **caractérisé en ce que** l'écart temporel (ΔT) est sélectionné de manière à ce que des zones d'image correspondantes dans la première image (11) et dans la deuxième image (12) soient espacées par un écart Δs prédéfinissable.

8. Procédé selon la revendication 1, **caractérisé en ce que** la position d'image respective horizontale de l'immatriculation du véhicule est déterminée à partir des deux images (11, 12) et est prise en considération lors du calcul de la valeur de calcul de la vitesse.

9. Système de détermination de la vitesse de véhicules qui passent devant une unité de détection (1), un dispositif de mesure (3) mesurant la vitesse des véhicules passant et, au cas où, pour un véhicule (2), la valeur de mesure de la vitesse dépasse une valeur maximale prédéfinie, un dispositif de prise d'image et de traitement d'image (6) incite à prendre une première image (11) et, avec un écart temporel (ΔT) suivant, une deuxième image (12) de ce véhicule (2) au moyen d'un capteur d'image numérique afin de calculer une valeur de calcul de la vitesse par lecture de l'information d'image de ces deux images (11, 12), la valeur de mesure et la valeur de calcul étant prises en compte par l'unité de détection lors de la détermination de la vitesse, et l'écart temporel (ΔT) étant dépendant de la valeur de mesure de la vitesse, **caractérisé en ce que** le dispositif de prise d'image et de traitement d'image (6) est réalisé de manière à ce que pour la détermination de la valeur de calcul de la vitesse, seulement une partie de l'information d'image contenue dans la première image (11) soit lue et **en ce que** la totalité de l'information d'image contenue dans la deuxième image (12) soit lue.

10. Système selon la revendication 9, **caractérisé en ce que** le dispositif de prise d'image et de traitement d'image (6) est réalisé de manière à ce que la proportion de l'information d'image de la première image (11), utilisée pour le calcul de la valeur de calcul de la vitesse, soit dépendante de la valeur de mesure de la vitesse.

11. Système selon la revendication 9 ou 10, **caractérisé en ce que** le dispositif numérique de prise d'image et de traitement d'image (6) comprend un capteur d'image numérique et est réalisé de manière à ce qu'une quantité d'information de la première image (11) soit utilisée lors du calcul de la valeur de calcul de la vitesse, laquelle est formée par lecture de ce capteur d'image en mode binning.

12. Système selon la revendication 11, **caractérisé en ce que** le dispositif de prise d'image et de traitement d'image (6) est réalisé de manière à ce que le capteur d'image soit lu ligne par ligne.

13. Système selon la revendication 12, **caractérisé en ce que** le dispositif de prise d'image et de traitement d'image (6) est réalisé de manière à ce que chaque nième ligne soit lue par le capteur d'image, la valeur n étant = 2, 3, 4, 5, ... N.

14. Système selon la revendication 13, **caractérisé en ce que** le dispositif de prise d'image et de traitement d'image (6) est réalisé de manière à ce que la valeur n soit dépendante de la valeur de mesure de la vitesse.

15. Système selon la revendication 11, **caractérisé en ce que** le dispositif de prise d'image et de traitement d'image (6) est réalisé de manière à ce que la deuxième image (12) présente la pleine capacité de résolution du capteur d'image.

16. Système selon la revendication 11, **caractérisé en ce que** le dispositif de prise d'image et de traitement d'image (6) est réalisé de manière à ce que la position d'image horizontale de l'immatriculation (10) du véhicule (2) soit déterminée dans la première image (11) et dans la deuxième image (12) et utilisée lors du calcul de la vitesse du véhicule.
